# EUROPÄISCHE PATENTSCHRIFT

(11) **EP 1 255 441 B1**
(45) Veröffentlichungstag und Bekanntmachung des Hinweises auf die Patenterteilung: **23.07.2003**
(21) Anmeldenummer: 01913682.9
(22) Anmeldetag: 19.02.2001
(51) Int. Cl.: A21C 3/08

(54) **BREZELHERSTELLUNGSSYSTEM**
PRETZEL PRODUCTION SYSTEM
SYSTEME DE PRODUCTION DE BRETZELS

(30) Priorität: 17.02.2000 DE 10007304; 19.06.2000 DE 10029171
(43) Veröffentlichungstag der Anmeldung: 13.11.2002
(73) Patentinhaber: A. FRITSCH GMBH & CO. KG, D-97348 Markt Einersheim (DE)
(72) Erfinder: BERNHARD, Udo, 97346 Iphofen (DE)
(74) Vertreter: Götz, Georg, Dipl.-Ing.
(86) Internationale Anmeldenummer: DE0100632
(87) Internationale Veröffentlichungsnummer: WO01060164

(56) Entgegenhaltungen:
- EP-A- 0 938 844
- DE-A- 1 782 289
- DE-A- 19 649 839
- DE-A- 19 717 323

## Beschreibung

Die Erfindung betrifft ein Verfahren zur Herstellung einer Brezel aus einem U-förmig gebogenen Teigstrang mit einer diesen haltenden Formeinheit, in welcher der Teigstrang mittels Teigstrang-Positioniermitteln in der U-Form gehalten oder erfaßt und in Verbindung mit Greifermitteln zu einem Brezelrohling mit einem geschlungenen Brezelknoten verarbeitet wird, wobei die Greifermittel die Teigstrangenden erfassen und halten. Die Erfindung betrifft ferner eine maschinelle, automatische Brezelherstellungsvorrichtung welche Mittel zur Zuführung U-förmiger Teigstränge in eine nachgeordnete Formeinheit aufweist, die zum Halten des zugeführten, U-förmigen Teigstrangs und zu dessen Verarbeitung zu einem Brezelrohling ausgebildet ist Ferner weist die Vorrichtung eine dem Ausgang der Formeinheit zugeordnete Brezelrohling-Abführeinrichtung sowie eine Greifeinrichtung auf, die zum Erfassen oder Halten der Teigstrangenden aus und/oder in der Formeinheit ausgebildet und längs einer Teigstrang- und Brezelrohling-Förderrichtung, die sich zwischen Zu- und Abführeinrichtung erstreckt, und längs einer Querrichtung dazu linear verfahrbar ist. Ferner weist die Brezelherstellungsvorrichtung zum Schlingen eines Brezelknotens aus Schenkelabschnitten des in der Formeinheit befindlichen U-förmigen Teigstrangs auf. Die Greifeinrichtung und die Schlingmittel sind von einer Steuerung kontrollierbar. Ferner betrifft die Erfindung eine Formeinheit die für die erfindungsgemäße Brezelherstellungsvorrichtung ausgebildet und geeignet ist.

Aus DE 198 07 692 A1 entsprechend dem Obergebriff des Patentanspruchs 1 und EP 0 938 844 A1 ist ein Brezeischlungsystem bekannt, bei dem eine Zuführeinrichtung mit einem Förderband Einsatz findet, auf dessen Oberfläche ein motorisch drehbares Richtrad mit quer aufstehender Drehachse angeordnet und abhebbar ist. Daran kommen geförderte Teigstränge unter Erhalt einer U-Form in Anlage und werden mit Abheben des Richtrades zur Weiterbeförderung freigegeben. Dem Richtrad ist ein Winkelgeber zur Erfassung seines Drehweges und dem U-förmig gebogenen Teigstrang eine Sensorik zur separaten Erkennung je eines seiner beiden Enden zugeordnet. Der Antriebsmotor des Richtrades wird durch eine Steuereinrichtung kontrolliert, die eingangsseitig mit dem Winkelgeber und der Sensorik verbunden ist. Ferner weist das vorbekannte Schlingsystem zwei der Zuführeinrichtung nachgeordnete Formeinheiten auf. Diese werden derart im Gegentakt betrieben, daß die erste Formeinheit von einer Aufnahmestellung direkt in die Abgabestellung versetzt wird, während gleichzeitig die zweite Formeinheit umgekehrt von der Abgabestellung direkt in die Aufnahmestellung versetzt wird. Mit diesem Schlingsystem läßt sich zwar eine sehr hohe Produktionsgeschwindigkeit erzielen, jedoch sind der Aufbau, die Konstruktion und die Bedienungsweise aufwendig. Teigstrang-Haltestifte, die zwischen Förderbändern vorspringen und die U-Form erhalten, sind gegenüber der Förderrichtung unbeweglich gehalten. Eine Möglichkeit zur Anpassung des U-Teigstrangs im größten mittleren Abschnitt insbesondere hinsichtlich seiner Länge außerhalb seiner frei hängenden Enden ist nicht gegeben.

Aus DE 44 30 172 A1 ist eine Einrichtung zur Herstellung von Brezeln bekannt, welche eine Schlingmaschine aufweist. Dabei werden Teigstränge mit einer Unterlänge, also einer geringeren Länge als der Soll-Länge verwendet. Die Teigstränge werden auf dem Sattel einer Aufnahmeplatte abgelegt, die in eine obere Position bewegt wird. Die beiden herabhängenden Schenkel unterbrechen dabei zunächst je eine ortsfest angeordnete Lichtschranke, die je einen in definiertem Abstand oberhalb der Lichtschranken angeordneten Greifer steuern. Die sich auf dem gleichen Niveau befindenden Greifer sind in vertikaler und horizontaler Richtung verschiebbar sowie um eine Horizontalachse drehbar. Mit zunehmender Bewegung der Aufnahmeplatte nach oben erkennt die Lichtschranke das Strangende und der zugehörige Greifer wird geschlossen. Durch diese Steuerung der Greifer wird erreicht, daß beide Endabschnitte des Teigstrangs in genau gleichem Abstand vom Strangende erfaßt werden, auch wenn der Teigstrang nicht genau symmetrisch auf der Aufnahmeplatte abgelegt worden sein sollte. Nachdem die beiden Greifer die beiden Endabschnitte des Teigstrangs erfaßt haben, wird die Aufnahmeplatte noch soweit nach oben bewegt, daß die Länge des Teigstrangs von dem zunächst vorhandenen Untermaß auf das Sollmaß gebracht wird. Im übrigen wird für den Schlingvorgang und die Herstellung eines Brezelrohlings eine Vielzahl von einzelnen, nacheinander angeordneten Stationen vorgeschlagen, was dem Zeit- und Konstruktionsaufwand erhöht.

Aus DE 41 05 254 C1 ist eine Vorrichtung zum Schlingen einer Brezel aus einem geraden Teigstrang bekannt, der allerdings definierter Länge sein muß. Die Vorrichtung weist eine Unterlage zur Aufnahme des Teigstrangs auf, die aus einer horizontalen Lage abhebbar ist. Oberhalb ist ein zweiarmiger Hebel angeordnet, der um eine vertikale Achse schwenkbar ist. Das jeweilige freie Ende des zweiarmigen Hebels bewegt sich in einem Bogen in einer horizontalen Ebene. Ferner sind zwei einarmige Hebel vorgesehen, die jeweils mit einem Hebelarm des zweiarmigen Hebelarms schwenkbar verbunden sind und im wesentlichen um eine aus der Vertikalen geneigte Achse schwenkbar sind. Im Bereich des der Schwenkachse abgewandten Endes ist ein Greifelement angebracht. Die Herstellung des zweiarmigen Hebels mit zusätzlich zwei einarmigen Hebeln ist insbesondere aufgrund von Biegungen und schrägen Winkeln aufwendig und teuer. Eine vertikale Verstellbarkeit ist nicht realisiert.

Aus DE 195 43 250 C2 ist eine Brezel-Herstellungsvorrichtung bekannt, bei der die Verformung des Teigstrangstrangs durch eine frei drehbar aufgehängte Scheibe bewirkt wird, die linear aus einer Anfangs- in eine Endstellung verfahren wird. Dabei wird dem Teigstrang die U-Form erteilt. Durch die Vorwärtsbewegung des Teigstrangs mittels der Scheibe gleiten die Teigstrangenden an Sensoren vorbei, die ein Ergreifen durch Halteklammern auslösen. Eine weitere Anpassung des Teigstrangs selbst erfolgt nicht. Eine ähnliche Teigstrang-Biegemethode ist aus DE 198 52 046 C1 bekannt.

Bei einer bekannten Brezel-Formvorrichtung etwa der eingangs genannten Art (WO 94/03 068) wird als Formeinheit eine Formschale verwendet, in deren Schalenboden mindestens eine Nut oder Rille mit einem der Brezelform entsprechenden, lang geschlungenen und/oder gebogenen Verlauf eingeformt ist. in diese Formschale werden mittels einer Greifeinrichtung Teigstränge eingelegt. Dazu weist die Greifeinrichtung zwei je einem Teigstrangende zugeordnete Greifer aus, die in den drei orthogonalen Raumachsen verfahrbar sind. Allerdings ist dabei das Überführen des zunächst geradlinigen Teigstrangs in die Formschale in brezelgenauer Ausrichtung schwierig. Dies stellt hohe Anforderung an die Qualität und Präzision der Greifer-Führungen. Das Schlingen des Brezelknotens wird durch Drehen der Formschale bewerkstelligt, wonach die vom Knoten abstehenden Teigstrangenden von den Greifern durch vertikales Verfahren auf den gebogenen Mittelabschnitt des Brezelrohlings aufgedrückt werden. Daraufhin wird die Formschale in Richtung zu einer Abführeinrichtung geschwenkt, was aber zu einem Herausfallen bzw. Herausschleudern des Brezelrohlings und einer konsequenten Formbeeinträchtigung führt. Mit der Formschale ist der Teigstrangverlauf einmal fest vorgegeben, eine dynamische Anpassung während des Schlingvorgangs ist nicht mehr gegeben. Ein stabiles festes Schlingen des Brezelknotens ist nicht gewährleistet.

Der Erfindung liegt die zugrunde, unter Vermeidung der vorgenannten Nachteile bei einem Brezeherstellungsverfahren unter Erzielung einer erhöhten Betriebszuverlässigkeit die Reproduzierbarkeit und gleichbleibende Genauigkeit der Brezelform zu erhöhen, sowie die Bewegungsabläufe für Greinfeinrichtung und/oder Formeinheit zu vereinfachen und zu vereinheitlichen. Damit einhergehend sollen die Herstellungs- und Betriebskosten einer korrespondierenden vorrichtung vermindert und die Bedienbarkeit vereinfacht werden. Zudem soll die Einsatzflexibilität insbesondere im Hinblick auf Verarbeitbarkeit von Teigsträngen unterschiedlicher Länge und Beschaffenheit erhöht sein.

Zur Lösung werden das im Patentanspruch 1 angegebene Herstellungsverfahren und die im Patentansprucht angegebene Brezelnerstellungsvorrichtung erfindungsgemäß vorgeschlagen. Die Formeinheit ist mit in und entgegen der Förderrichtung linear antreibbaren und geführten, von der Steuerung kontrollierbaren Teigstrang-Positioniermitteln versehen. Mit diesen lassen sich der Teigstrang oder der fertig geformte Brezelrohling ganz oder teilweise gegenüber der die Teigstrangenden haltenden Greifeinrichtung in und entgegen der Förderrichtung bewegen, insbesondere zu Dehnungs- oder Beförderungszwecken. Erfindungsgemäß ist dabei die Steuerung eingangsseitig mit Signalgebem, die auf die Stellung der Strangenden, der Greifeinrichtung und/oder der Schlingmittel bezogen sind bzw. ansprechen, und ausgangsseitig mit dem Linearantrieb für die Positioniermittel zu dessen Steuerung gekoppelt. Damit wird über einfache und kostengünstig sowie übersichtlich herstellbare Konstruktions- und Betriebsmittel die Möglichkeit geschaffen, beispielsweise zu kurze Teigstränge auf die richtige Länge hin zu dehnen oder auch die Greifeinrichtung beim Schlingen und Umlegen der Teigstrangenden auf den Brezel-Mittelteil zu unterstützen. Die Erfindung läßt sich mit einheitlichen Linearantrieben und Linearführungen kostengünstig realisieren. Gleichzeitig ist die Wartbarkeit und damit auch die Verfügbarkeit gegenüber dem Stand der Technik erhöht. Indem man mit dem erfindungsgemäßen System vorgeformte Brezelstränge auch unterschiedlicher Länge eine Streckung bzw. Dehnung erteilen kann, läßt sich auch der Anforderung begegnen, daß der Brezelknoten mit Fertigschlingen fest geschlossen bleibt. Dies ist wichtig, da beim nachfolgenden Belaugungsprozeß die Lauge nicht in den geschlossenen Knoten eindringen soll. Dies würde die Qualität und das Aussehen der Brezel mindern.

Bei den konventionellen Brazelherstellungsverfahren variiert die Länge des Teigstrangs. Dem gegenüber eröffnet eine vorteilhafte Ausbildung der Erfindung die Möglichkeit, durch unterschiedliche Dehnungen, die sich über eine frei programmierbare Steuerung beispielsweise programmieren lassen, Brezelrohlinge gleichbleibender Größe herzustellen. Dies kann insbesondere dadurch erfolgen, daß bei kurzen Brezelsträngen eine größere Dehnung ausgeübt wird als bei längeren. Erfindungsgemäß wird dies dadurch erreicht, daß die Formeinheit, in welcher die Brezel insbesondere beim Schlingen gehalten ist, aufgrund ihrer Linearantriebe in ihrer Lage veränderlich ist. Ein mit der Erfindung erzielbarer Vorteil besteht darin, daß der gesamte Brezelrohling-Herstellungsprozeß in der Formeinheit ablaufen kann, und zudem der Brezelrohling durch die Positioniermittel zur Abführeinrichtung bewegbar ist. Dadurch wird die Belastung auf dem Brezelstrang und eine Deformation des fertig geschlungenen Brezelrohlings gemindert. Außerdem entfällt die Notwendigkeit, nach dem Schlingvorgang die Brezel von Hand nachziehen zu müssen.

Im Rahmen der allgemeinen erfinderischen ldee liegt auch eine Formeinheit mit Positioniermitteln, welche ein oder mehrere Förderbänder und ein oder mehrere mit diesem zusammenwirkende und/oder baulich integrierte Haltekörper umfassen, wobei sowohl die Förderbänder als auch die Haltemittel in oder entgegen der Förderrichtung linear geführt sind. Nach einer besonders vorteilhaften Ausbildung sind mehrere solcher Förderbänder nebeneinander verlaufend angeordnet, und die Haltekörper, insbesondere ausgeführt als Haltestifte, springen dazwischen in Richtung zum Teigstrang vor, um diesen zu halten zu. Dabei ist es zweckmäßig, daß die Haltekörper mit dem genannten Linearantrieb zur Bewegbarkeit in und entgegen der Förderrichtung verbunden sind.

Gemäß einer Ausbildung der Erfindung sind die Greifeinrichtung und die Schlingmittel baulich und/oder funktionell miteinander integriert. Die Greifeinrichtung besitzt zwei, je einem Ende des in der Formeinheit befindlichen, U-förmigen Teigstrangs zugeordnete Greiforgane, die an einem gemeinsamen Drehjoch angeordnet sind. Dieses ist von einem von der Steuerung kontrollierbaren Drehantrieb drehbar und in der Querrichtung von und zu dem Formeinheit befindlichen Teigstrang linear verfahrbar. Dadurch können die Teigstrangenden über Ansteuerung des Drehantriebs miteinander zur Bildung des Knotens verschlungen und danach auf den gebogenen Mittelabschnitt des Brezelrohlings gedrückt werden.

Im Rahmen der allgemeinen erfinderischen ldee liegen femer Schlingmittel für das genannte Herstellungssystem, die sich durch auf einer Höhe zwischen der Formeinheit und der Greifeinrichtung angetriebene und auf- und auseinanderführbare Schlingführungselemlente auszeichnen. Beispielsweise die einander zugewandten. Enden der Schlingsführungselemente sind derart klammerartig ausgebildet, daß sie zum Umfassen, Umgrenzen oder Umklammem der Teigstrang-Schenkelabschnitte bei deren Schlingvorgang geeignet sind.

Weitere Einzelheiten, Merkmale, Vorteile und Wirkungen auf der Basis der Erfindung ergeben sich aus der nachfolgenden Beschreibung eines bevorzugten Ausführungswegs der Erfindung und aus den Zeichnungen. Diese zeigen in:
- Figur 1: eine Seitenansicht der erfindungsgemäßenvorrichtung,
- Figur 2: eine Draufsicht auf den Formtisch 2 mit Teilansicht des Drehkopfes 24 gemäß Schnittlinie A-A in Figur 1 (linker Greifer 34 in geschwenkter Position dargestellt),
- Figur 3: eine Draufsicht auf den Formtisch 2 mit Teilansicht der Finger 39a, 40 und 41, 42 der linken und rechten Greifer 34 und 35 eines noch nicht ergriffenen Brezelstranges 36,
- Figur 4: eine Draufsicht auf den Formtisch 2 mit dem durch die Finger 39a, 40 und 41, 42 ergriffenen Brezelstrangenden 36b,
- Figur 4a: eine Draufsicht auf den Formtisch 2 mit Darstellung des abgeschlossenen Dehnvorgangs um das Dehnungsmaß d,
- Figur 5: eine Draufsicht auf den Formtisch 2 mit geschlossenen Führungen 14 und 15 für den Brezelknoten beim Brezelstrang in Omegaform,
- Figur 5a: eine Seitenansicht der Vorrichtung gemäß Figur 5,
- Figur 6: eine Draufsicht auf den Formtisch 2 mit ausgeblidetem Knoten und geöffneten Führungen 14, 15,
- Figur 6a: eine Seitenansicht der Vorrichtung mit gegenüber Figur 6 um 90° gedrehten Drehkopf 24,
- Figur 7: eine Draufsicht auf den Formtisch 2 mit fertiggeschlungenem Brezelrohling,
- Figur 7a: eine Seitenansicht der Vorrichtung gemäß Figur 7 mit Darstellung der geöffneten Finger und ausgefahrenem Stössel 49 zum Ablegen der Brazelstrangenden 36b auf den Brezelmittelteil 36a,
- Figur 8: eine Draufsicht auf den Formtisch 2 und den Zwischentisch 18 mit fertigem Brezelrohling 45, sowie neu ankommendem U-förmig gebogenen . Brezelstrang 36 von Zuführeinrichtung 1,
- Figur 8a: eine Seitenansicht des Formtisches 2 mit Zwischentisch 18 und Teilansicht des Zuführsystems 1, sowie eingefahrenen Haltestiften 5, gemäß Figur 8,
- Figur 9a/b: Draufsichten auf den Formtisch 2 ohne und mit Verstellung der Brezelform 6 um das Versetzmaß e.

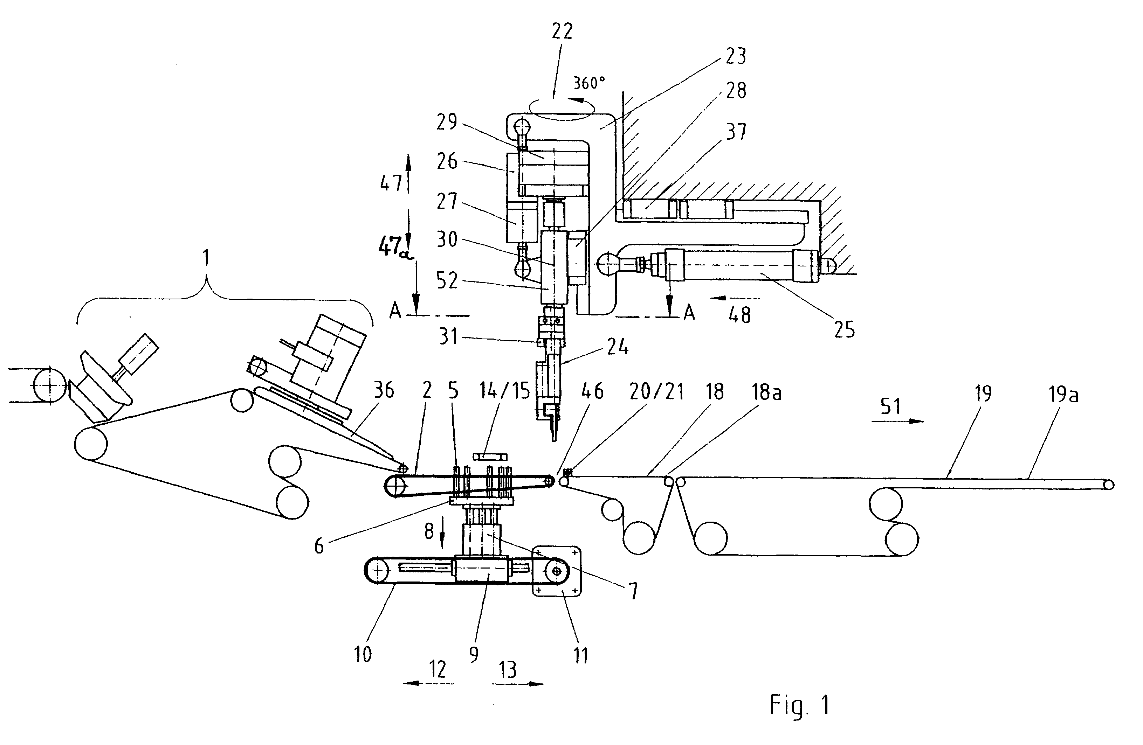

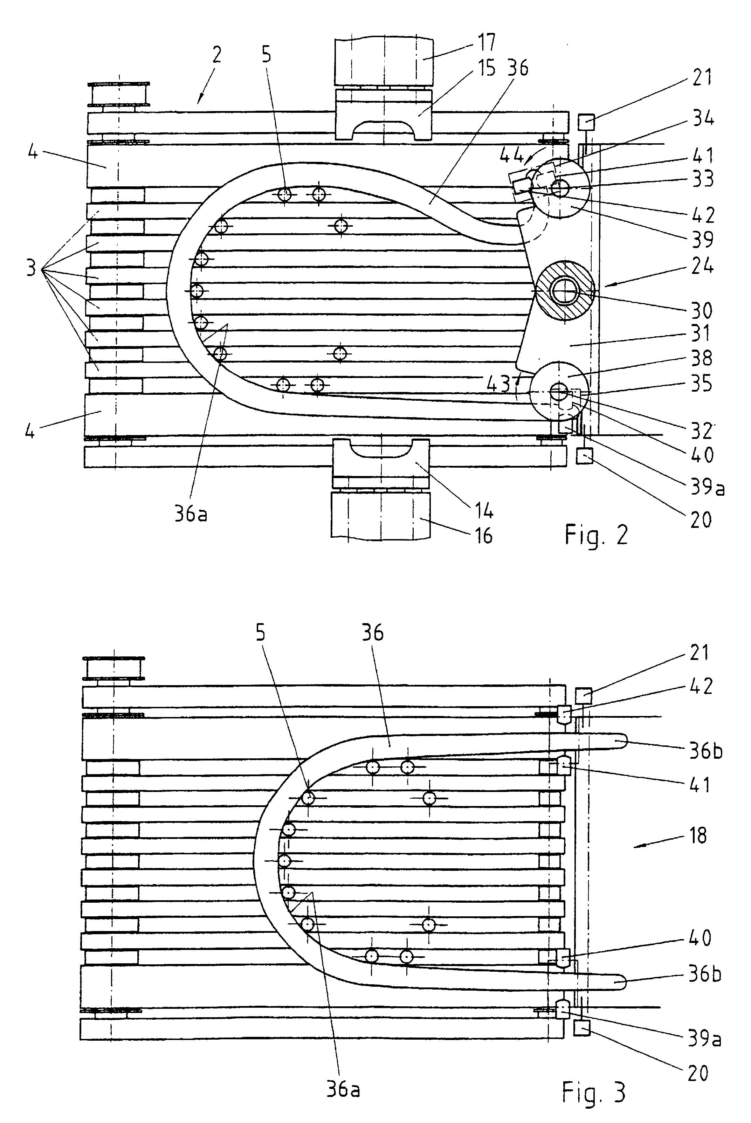

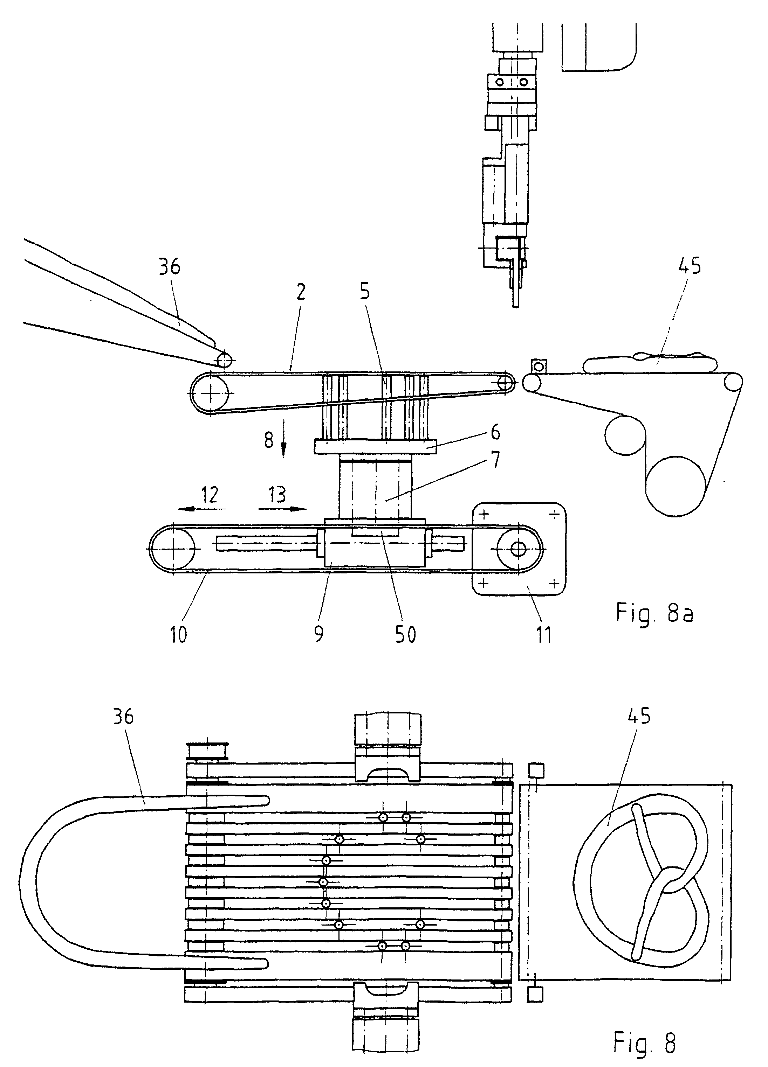

In Figur 1 ist das Brezelherstellungsvorrichtung in der Seitenansicht dargestellt. Die verwendete Zuführeinrichtung 1, zum Biegen, Vermessen und Ausrichten der U-förmigen Teigstränge ist aus den Patentanmeldungen DE 19807692.4 und EP 99103614.6 bekannt. Das weitere Brezelschlingsystem besteht im wesentlichen aus dem Formtisch 2, dessen Förderband in Figur 2 aus schmalen Förderriemen 3 und breiten Förderriemen 4 besteht. Durch die freien Zwischenräume zwischen den Förderriemen 3.4 ragen Haltestifte 5 eines Brezelformwerkzeugs 6. Das Brezelformwerkzeug 6 mit den Haltestiften 5 ist auf einem Hubzylinder 7 montiert, über den die Haltestifte 5 in Vertikal-Richtung 8 (vgl.Figur 8a) in den Formtisch 2 versenkbar sind. Die Brezelform 6 ist auf einem Führungswagen 9 fest montiert. Der Führungswagen 9 ist mit den Zahnriemen 10 in einem Antriebsbereich 50 (vgl. Fig.8a) fest verbunden und wird durch den Antriebsmotor 11 angetrieben. Über die Antriebselemente 10, 11 und den Führungswagen 9 läßt sich das Brezelformwerkzeug 6 in entgegengesetzte Antriebs-Richtungen 12 und 13 bewegen. Oberhalb des Formtisches 2 befinden sich quer zur Förderrichtung 51 die Knoten-Schling-Führungselemente 14 und 15 (vgl. Figur 2), verstellbar durch Hubzylindern 16 und 17. Dem Formtisch 2 ist ein Zwischentisch 18 mit Förderband 18a und ein Abführtisch 19 mit Förderband 19a nachgeordnet. Am Anfang des Förderbandes 18a des Zwischentisches 18 befinden sich quer zur Laufrichtung 51 Sensoren 20 und 21. Oberhalb des Formtisches 2 und des Zwischentisches 18 befindet sich eine Schlingvorrichtung 22. Die Schlingvorrichtung 22 besteht im wesentlichen aus einer Horizontalführung 37 mit Hubzylinder 25, einer Vertikalführung 28 mit zwei Stellungszylindern 26 und 27, einem Drehantrieb 29 mit Drehführung 52 und Drehkopf 24. Mittels des Halteteils 23 kann die Vertikalführung 28 mit den Zylindern 26 und 27, dem Drehantrieb 29, dem Drehkopf 24 gemeinsam über den Horizontalantrieb 37 und den Hubzylinder 25 in Horizontalrichtung bewegt werden. Der Drehkopf 24 kann mit den Hubzylindern 26 und 27 und der Linearführung 28 in vertikaler Richtung verstellt werden. Mittels des Drehantriebes 29 kann der Drehkopf 24 um die vertikale Achse 30 um 360° gedreht werden. Der Drehkopf 24 besteht am oberen Ende aus einem Joch 31, an dessen beiden Enden die Greifer 34 und 35 mittels der Drehantriebe 38, 39 um die vertikalen Achsen 32 und 33 schwenkbar angeordnet sind (siehe Figur 2).

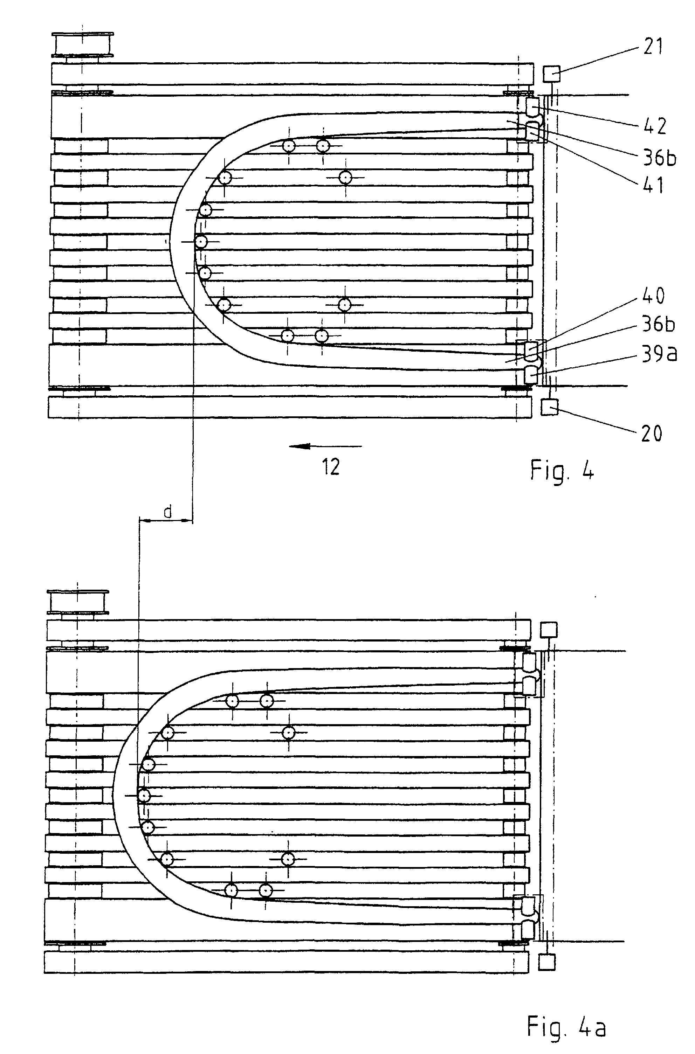

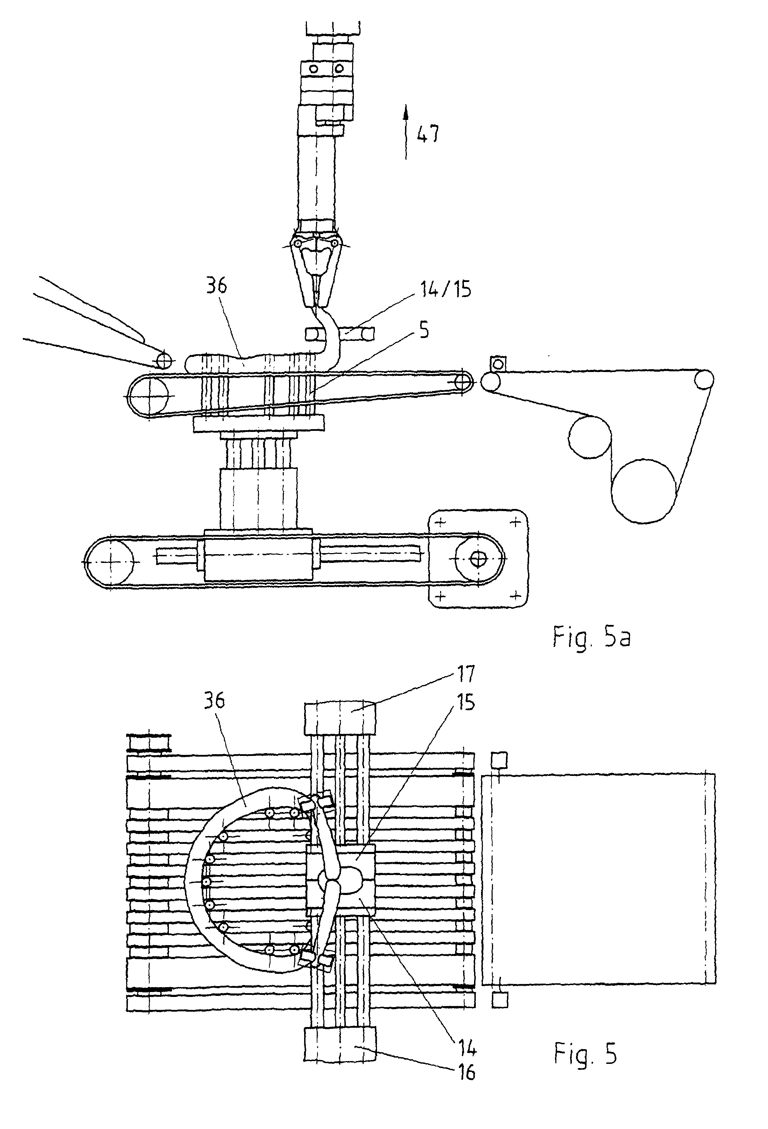

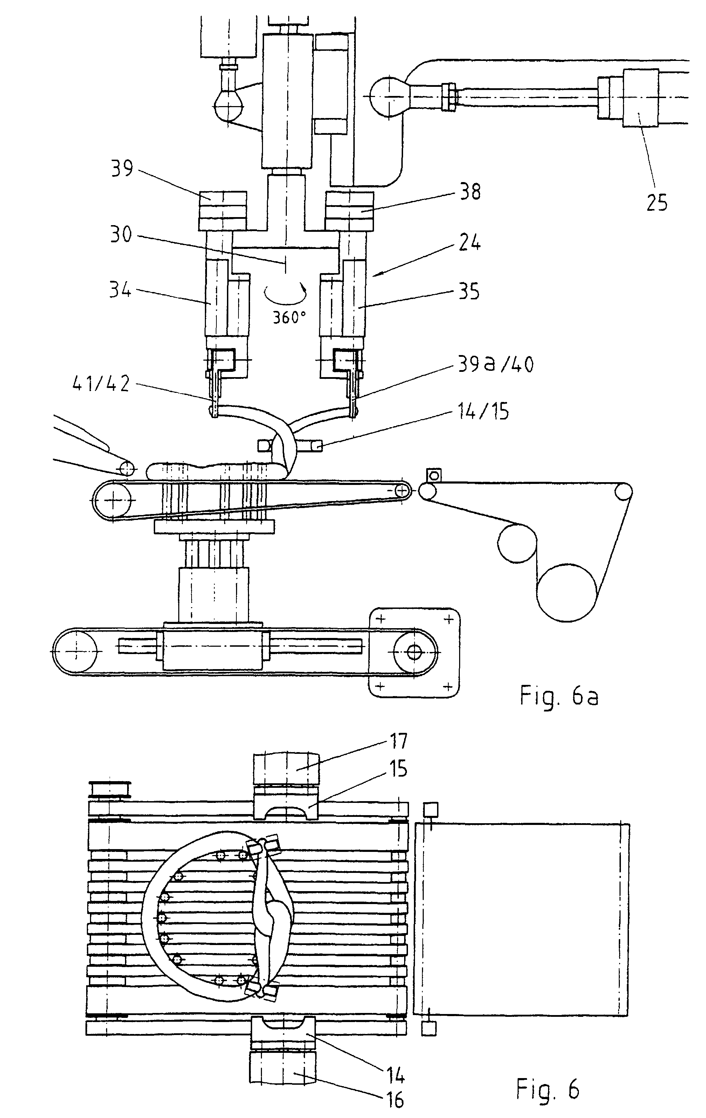

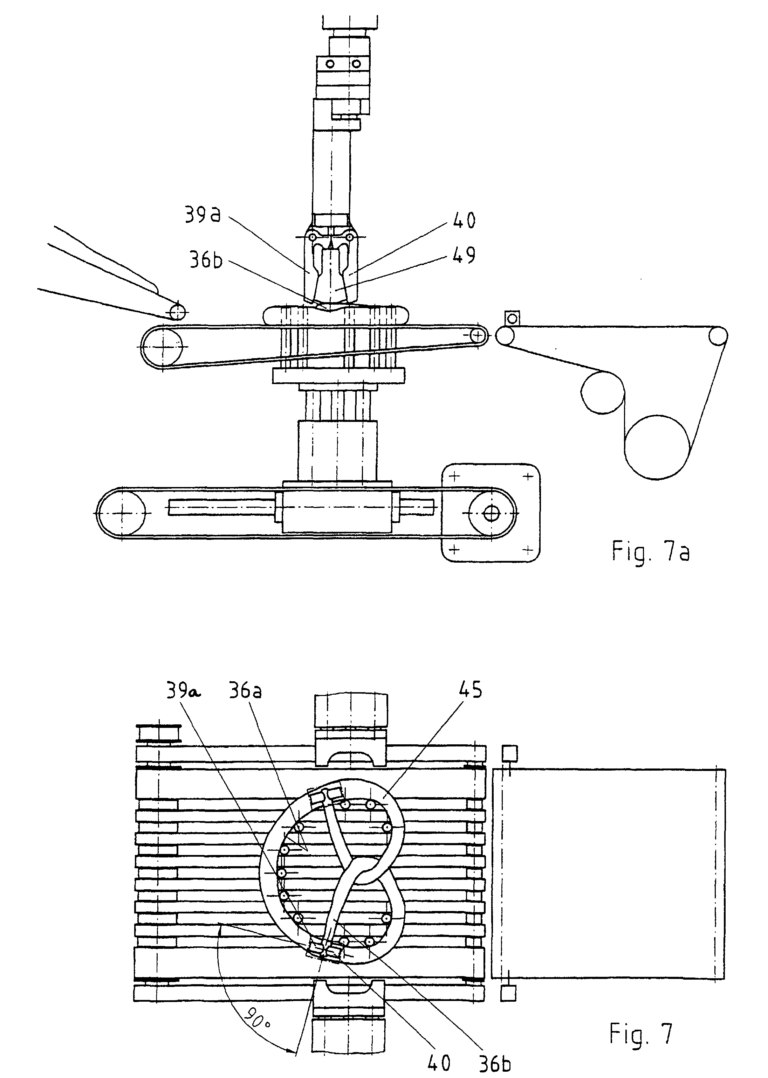

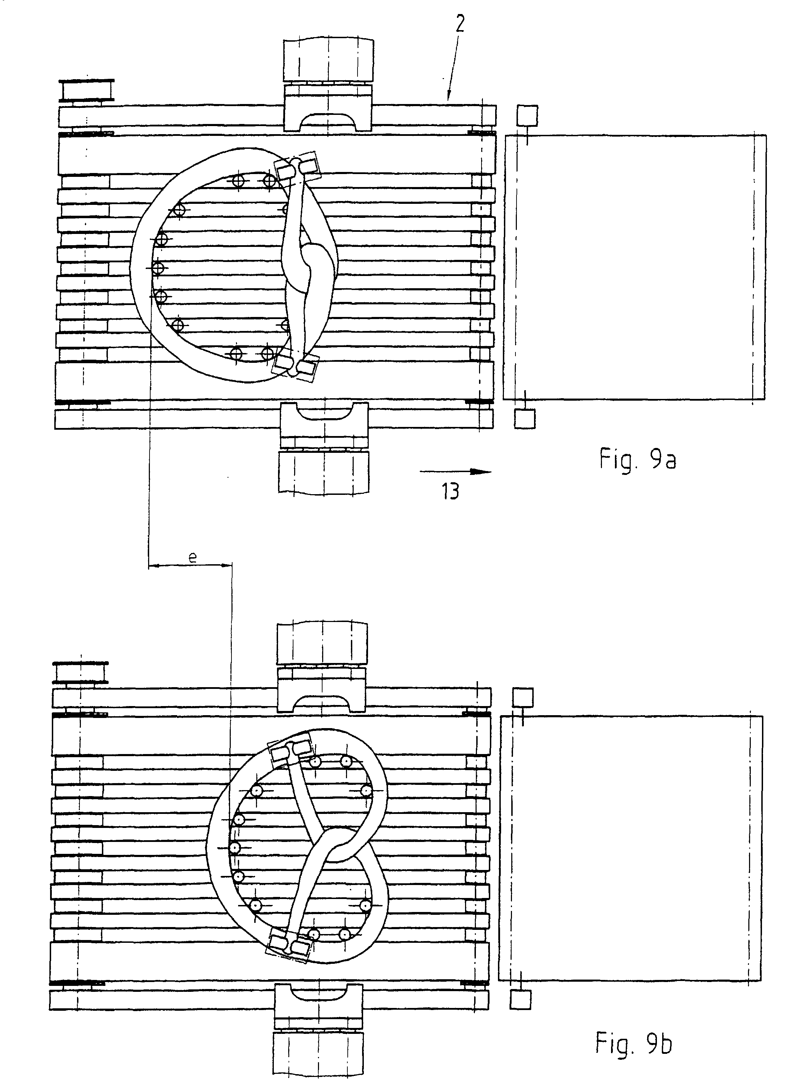

Der von der Zuführeinrichtung 1 kommende U-förmige Brezelstrang 36 (vgl. Figur 1) wird mittels der Förderbänder 3 und 4 auf den Formtisch 2 übergeben, bis der Mittelteil 36a des Brezelstranges 36 an den Haltestiften 5 des Brezelformwerkzeugs 6 gemäß Figur 3 anliegt. Dazu befindet sich das Brezelformwerkzeug 6 in der äußersten rechten Position entsprechend Verschiebung in Richtung 13 nach rechts und die Haltestifte 5 in oberster Stellung. Gemäß Figur 3 liegen dabei die Brezelstrangenden 36b auf dem Zwischentisch 18 auf und haben dabei die Sensoren 20 und 21 passiert. Gleichzeitig wird der Drehkopf 24 mit den Greifern 34 und 35 durch das Ausfahren der beiden Hubzylinder 26 und 27 in die tiefste Stellung (Vertikal-Richtung 47a nach unten) verstellt. Dabei kommen die Finger 39a und 40 des rechten Greifers 35 und die Finger 41 und 42 des linken Greifers 34 im Zwischen-Bereich 46 zwischen dem Formtisch 2 und dem Zwischentisch 18 zum Liegen. Damit wird ein sicheres Greifen der Brezelstrangenden 36b gewährleistet. Durch das Bewegen der Haltestifte 5 mit dem Brezelformwerkzeug 6 mittels der Antriebselemente 9, 10, 11 in die linke Horizontal-Richtung 12 wird der Brezelstrang 36 durch die Finger 39, 40 und 41, 42 gezogen, bis die Sensoren 20 und 21 die Brezelstrangenden 36b nicht mehr erkennen. Über den rechten Sensor 20, und einer nicht dargestellten Steuerung, werden die Finger 39, 40 des rechten Greifers 35 zum Schließen, Greifen und Festhalten eines der Brezelstrangenden 36b angesteuert. Das gleiche gilt für den linken Sensor 21 mit dem linken Greifer 34 (vgl. Figur 4). Somit können auch nicht deckungsgleich gegenüberliegende Strangenden 36b unabhängig und einzeln voneinander lagegenau ergriffen werden. Nach dem Greifen der Strangenden 36b wird der Teigstrang um ein einstellbares Dehnungsmaß d gemäß Figur 4a gedehnt. Nach dem Dehnen des Teigstranges werden die nachfolgenden Bewegungen zum Teil überlagert ausgeführt. Dazu wird die Schlingeinrichtung 22 mit dem Drehkopf 24 durch das Einziehen der Zylinder 26 und 27 in vertikaler Abheberichtung 47 abgehoben und durch das Ausfahren des Zylinders 25 in Richtung 48 bewegt, bis das Schlingsystem 22 wie in Figur 5a dargestellt die Position zum Schlingen des Knotens erreicht hat. Durch das Ausfahren der Zylinder 16 und 17 und das Schließen der Knoten-Schlingführungen 14 und 15 wird dem Brezelstrang die Form eines Omegas gegeben (vgl. Figur 5). Damit wird die Bildung des Knotens verbessert und ein Lösen des Brezelstranges 36 von den Haltestiften 5 verhindert. Mit den Drehantrieben 38 und 39 werden die Greifer 34 und 35 um die vertikalen Drehachsen 32 und 33 in Dreh-Richtungen 43 und 44 aufeinander zugeschwenkt, Figur 2. Der rechte Greifer 35 mit den Fingern 39a und 40 und der linke Greifer 34 mit den Fingern 41 und 42 werden dabei soweit geschwenkt, bis diese jeweils einen rechten Winkel mit den Strangenden 36b der fertig geschlungenen Brezel 45 bilden, Figur 7. Nun wird der Drehkopf 24 über den Drehantrieb 29 um eine vertikale Drehachse 30 zur Bildung des Knotens um 360°, gemäß Figur 6/6a, gedreht. Nach dem Bilden des Knotens werden die Führungen 14 und 15 durch das Einfahren der Hubzylinder 16 und 17 gemäß Figur 6 geöffnet. Damit die Brezelstrangenden 36b an der vorgegebenen Position der Brezel abgelegt werden können, wird der Brezelstrang 36 durch Verstellen über die Antriebselemente 9, 10, 11, die Haltestifte 5 mit der Brezelform 6 um das Versetzmaß e gemäß Figur 9a/b nach rechts in Richtung 13 bewegt. Durch das Ausfahren des Hubzylinders 27 in vertikaler Abwärts-Richtung 47a und das Öffnen der Finger 39, 40 und 41, 42 und dem Ausfahren der Stössel 49 zwischen den Fingern werden die Enden des Brezelstranges 36b auf den Teigstrangmittelteil 36a angedrückt, siehe Figur 7a. Der Brezelrohling 45 ist jetzt fertiggestellt. Zum Weitertransport werden die Haltestifte 5 mittels des Hubantriebes 7 von dem Brezelrohling 45 in vertikaler Abwärts-Richtung 8 weggezogen und durch Einfahren des Hubzylinders 27, in vertikaler Aufwärts-Richtung 47, freigegeben. Der Brezelrohling 45 wird mittels der Förderbänder 3, 4, 18a zur Weiterbehandlung auf den Abführtisch 19 befördert, Figur 8a. Gleichzeitig wird ein neuer Brezelstrang 36 von der Zuführeinheit 1 auf den Formtisch 2 übernommen, gemäß Figur 8. Die Schlingeinrichtung 22 mit dem Drehkopf 24 und den Greifern 34 und 35, sowie die Haltestifte 5 mit der Brezelform 6 werden zur Aufnahme des nächsten bzw. neuen Brezelstranges in die Ausgangsposition, gemäß Figur 1, gefahren.

### Bezugszeichenliste

- 1: Zuführeinrichtung
- 2: Formtisch
- 2a: Förderband
- 3: schmaler Förderriemen
- 4: breiter Förderriemen
- 5: Haltestift
- 6: Brezelformwerkzeug
- 7: Hubzylinder für Haltestift
- 8: (Vertikal-)Richtung für Haltestift
- 9: Führungswagen
- 10: Zahnriemen
- 11: Antriebsmotor
- 12: Horizontal-Richtung links
- 13: Horizontal-Richtung rechts
- 14: Knoten-Schling-Führungsteil
- 15: Knoten-Schling-Führungsteil
- 16: Hubzylinder
- 17: Hubzylinder
- 18: Zwischentisch
- 18a: Förderband
- 19: Abführtisch
- 19a: Förderband
- 20: Sensor
- 21: Sensor
- 22: Schlingvorrichtung
- 23: Halteteil
- 24: Drehkopf
- 25: Hubzylinder
- 26: Stellungszylinder
- 27: Stellungszylinder
- 28: Vertikalführung
- 28a: Linearführung
- 29: Drehantrieb
- 30: vertikale Achse
- 31: Joch
- 32: vertikale Achse
- 33: vertikale Achse
- 34: Greifer
- 35: Greifer
- 36: Brezelstrang
- 36a: Mittelteil
- 36b: Strangende
- 37: Horizontalführung
- 38: Drehantrieb
- 38a: Richtung
- 39: Drehantrieb
- 39a: Greiferfinger
- 40: Greiferfinger
- 41: Greiferfinger
- 42: Greiferfinger
- 43: Dreh-Richtung
- 44: Dreh-Richtung
- 45: Brezelrohling
- 46: Zwischen-Bereich
- 47: Vertikal-Richtung nach oben
- 47a: Vertikal-Richtung nach unten
- 48: Horizontal-Richtung
- 49: Stössel
- 50: Bereich
- 51: Laufrichtung
- 52: Drehführung
- d: Dehnungsprozeß
- e: Bewegungsmaß

## Patentansprüche

1. Verfahren zur Herstellung einer Brezel aus einem U-förmig gebogenen Teigstrang (36) mit einer diesen haltenden Formeinheit (2,6), in welcher der Teigstrang (36) mittels Teigstrang-Positioniermitteln (3,4;5) in der U-Form gehalten oder erfaßt und in Verbindung mit Greifermitteln (34,35) zu einem Brezelrohling (45) mit einem geschlungenen Brezelknoten verarbeitet wird, wobei die Greifermittel (34,35) die Teigstrangenden (36b) erfassen und halten, **dadurch gekennzeichnet, dass** die Positioniermittel (3,4;5) zum Dehnen, Spannen und/oder Strecken des in der Formeinheit (2,6) und von den Greifermitteln (34,35) an seinen Enden gehaltenen U-Teigstrangs (36) um ein vorbestimmtes Dehnungsmaß (d) verwendet werden, indem die am Teigstrang (36) anliegenden oder diese erfassenden oder fördernden Positioniermittel (3,4;5) in oder gegenüber der Formeinheit (2,6) entsprechend dem Dehnungsmaß (d) bewegt oder verstellt werden.

2. Verfahren nach Anspruch 1, **dadurch gekennzeichnet, dass** das Schlingen des Brezelknotens nach dem Verstellen der Positioniermittel (3,4;5) entsprechend dem Dehnungsmaß (d) und unter Beibehaltung der damit erzeugten Teigstrang-Spannung erfolgt.

3. Verfahren nach Anspruch 1 oder 2, **gekennzeichnet durch** auf- und auseinanderführbare Schlingführungselemente (14,15), die zum Umfassen, Umgrenzen oder Umklammem der Teigstrang-Schenkeiabschnitte (36b) beim Schlingvorgang des Brezelknotens verwendet wenden.

4. Verfahren nach einem der vorangehenden Ansprüche, **dadurch gekennzeichnet, dass** das Dehnungsmaß (d) in Abhängigkeit von der Teigart vorbestimmt wird.

5. Verfahren nach einem der vorangehenden Ansprüche, **dadurch gekennzeichnet, dass** nach dem Schlingen des Brezelknotens die Positioniermittel (3,4;5) zum Verstellen des U-förmig gebogenen Mittelabschnitts (36a) des in der Formeinheit (2,6) und von den Greifermitteln (34,35) an seinen Enden gehaltenen U-Teigstrangs (36) gegenüber den Teigstrangenden (36b) beziehungsweise Greifermitteln (34,35) um ein vorbestimmtes Teigstrang-Versetzmaß (e) in Richtung zu den Teigstrangenden (36b) und/oder Greifermitteln (34,35) verwendet werden, indem die am Teigstrang (36) anliegenden, oder diese erfassenden oder fördemden Positioniermittel (3,4;5) in oder gegenüber der Formeinheit (2,6) entsprechend dem Teigstrang-Versetzmaß (e) bewegt oder verstellt werden, und danach die Teigstrangenden (36b) mit den Greifermitteln (34,35) auf den U-förmig gebogenen Abschnitt (36a) des Teigstrangs (36) aufgesetzt werden.

6. Verfahren nach Anspruch 5, **dadurch gekennzeichnet, dass** das Teigstrang-Versetzmaß (e) je nach Kundenwunsch vorbestimmt wird.

7. Vorrichtung zur maschinellen Brezelherstellung, zur Durchführung des Verfahrens nach einem der vorangehenden Ansprüche, mit einer Einrichtung (1) zur Zuführung U-förmiger Teigstränge (36) in eine nachgeordnete Formeinheit (2), die zum Halten des zugeführten U-förmigen Teigstrangs (36) und zu dessen Verarbeitung zu einem Brezelrohling (45) ausgebildet ist, mit einer einem Ausgang der Formeinheit (2) zugeordneten Brezelrohling-Abführeinrichtung (18,19), mit einer Greifeinrichtung (34,35), die zum Erfassen oder Halten der Teigstrangenden (36b) aus und/oder in der Formeinheit (2) ausgebildet und längs einer Teigstrang- und Brezeirohling-Förderrichtung (51) zwischen Zu- und Abführeinrichtung (1;18,19) und einer Querrichtung (38,47) dazu linear verfahrbar ist, und mit Mitteln (14-17;22,29,30) zum Schlingen eines Brezel-Knotens aus Schenkelabschnitten des in der Formeinheit (2) befindlichen U-förmigen Teigstrangs (36), wobei die Greifeinrichtung (34,35) und die Schlingmittel (14-17;22,29,30) von einer Steuerung kontrollierbar sind, und die Formeinheit (2,6) mit in und entgegen der Forderrichtung (51) linear antreibbaren (10,11) und geführten (9), von der Steuerung kontrollierbaren Teigstrang-Positioniermitteln (3,4;5) versehen ist, mittels welcher der Teigstrang (36) oder der Brezelrohling (45) ganz oder teilweise gegenüber der die Teigstrangenden (36b) haltenden Greifeinrichtung (34,35) in und entgegen der Förderrichtung (51) bewegbarbar sind, wobei die Steuerung eingangseitig mit Signalgebem, die auf die Stellung der Strangenden (36b), der Greifeinrichtung (34,35) und/oder der Schlingmittel (22,29,30) ansprechen oder bezogen sind, und ausgangsseitig mit dem Linearantrieb (10,11) für die Posittoniermittel (3,4;5) zu dessen Ansteuerung gekoppelt ist, **dadurch gekennzeichnet, dass** die Steuerung mit einem Teigstrang-Dehnungsmaß (d) einstellbar ist, gemäß welchem bei Erfassen der Teigstrangenden (36b) durch die Greifeinrichtung (34,35) der Linearantrieb (10,11) der Positioniermittel (3,4;5) zum Dehnen beziehungsweise Verschieben des Teigstrangs (36) in Richtung (12) weg von der die Teigstrangenden (36b) haltenden Greifeinrichtung (34,35) ansteuerbar ist.

8. Vorrichtung nach Anspruch 7, **dadurch gekennzeichnet, dass** die Steuerung mit einem Teigstrang-Versetzmaß (e) einstellbar ist, gemäß welchem nach Vollendung des Knotens durch die Schlingmittel (22,29,30) der Linearantrieb (10,11) der Positioniermittel (3,4;5) zum Versetzen beziehungsweise Verschieben des Teigstrangs (36) in Richtung (13) zu der die Teigstrangenden (36b) haltenden Greifeinrichtung (34,35) derart bewegbar sind, dass die Teigstrangenden (36b) durch eine Verstellung der Greifeinrichtung (34,35) in der Querrichtung (38) auf den sonstigen Teigstrang (36a) aufsetzbar sind.

9. Vorrichtung nach einem der vorangehenden Ansprüche, **dadurch gekennzeichnet, dass** in einer Anfangsphase der Linearantrieb (10,11) der Positioniermittel (3,4;5) von der Steuerung derart ansteuerbar ist, dass die Enden (36b) des in der Formeinheit (2) U-förmig befindlichen Teigstrangs (36) auf der Abführeinrichtung (18,19) zur Auflage Kommen, und in einer späteren Phase der Linearantrieb (10,11) der Positioniermittel (3,4;5) von der Steuerung derart ansteuerbar ist, dass die Enden (36b) des Teigstrangs (36) von der Abführeinrichtung (18,19) zur Formeinheit (2) gezogen werden, wobei von der Steuerung die Greifeinrichtung (34,35) derart ansteuerbar ist, dass sie die Teigstrangenden (36b) erfasst, wenn deren Position zwischen der Formeinheit (2) und der Abführeinrichtung (18,19) feststellbar ist.

10. Vorrichtung nach Anspruch 9, **gekennzeichnet durch** mit dem Eingang der Steuerung verbundene Sensormittel (20,21), die im Zwischenbereich (46) zwischen dem Ausgang der Formeinheit (2) und dem Eingang der Abführeinheit (18,19) zur Erkennung der Teigstrangenden (36b) angeordnet und ausgebildet sind.

11. Vorrichtung nach einem der vorangehenden Ansprüche, **dadurch gekennzeichnet, dass** die Abführeinrichtung (18,19) einen Zwischentisch (18) mit Förderband (18a), dessen Eingang dem Ausgang der Formeinheit (2) unmittelbar gegenüberliegt, und einen nachgeordneten Abführtisch (19) mit Förderband (19a) aufweist, wobei das Förderband (18a) des Zwischentisches (18) zum Betrieb mit unterschiedlichen Geschwindigkeiten ausgebildet ist.

12. Vorrichtung nach einem der vorangehenden Ansprüche, **dadurch gekennzeichnet, dass** die Greifeinrichtung (34,35) und die Schlingmittel (22,29,30) baulich und/oder funktionell miteinander integriert sind, indem die Greifeinrichtung (34,35) zwei, je einem Ende des in der Formeinheit befindlichen U-förmigen Teigstrangs zugeordnete Greiforgane (39a,40;41) aufweist, die an einem gemeinsamen Drehjoch (31) angeordnet sind, das von einem von der Steuerung kontrollierbaren Drehantrieb (29) drehbar und in der Querrichtung (38,47) von und zu dem in der Formeinheit (2) befindlichen Teigstrang (36) linear verfahrbar ist.

13. Vorrichtung nach Anspruch 12, **dadurch gekennzeichnet, dass** das Drehjoch (31) für die Greiforgane (39a,40;41,42) zwei Befestigungsstellen aufweist, die in einem Abstand voneinander angeordnet sind, der dem Abstand der Enden des U-förmigen, in der Formeinheit (2) befindlichen Teigstrangs (36) entspricht.

14. Vorrichtung nach Anspruch 12 oder 13, **gekennzeichnet durch** ein derart geführtes Drehjoch (31), dass dessen Drehachse (30) ausschließlich quer zur Ober- und/oder Auflageseite der Formeinheit (2) verläuft.

15. Vorrichtung nach einem der vorangehenden Ansprüche, **gekennzeichnet durch** Schlingmittel (14-17;22,29,30) mit linear quer zur Forderrichtung (51) zwischen der Formeinheit (2) und der Greifeinrichtung (34,35) angetriebene (16,17) und auf- und auseinanderführbare Schlingführungselemente (14,15), die zum Umfassen, Umgrenzen oder Umklammem der Teigstrang-Schenkelabschnitte (36b) beim einer Brezel-Knotenbildung dienenden Schlingvorgang ausgebildet sind.

16. Formeinheit (2) für eine Vorrichtung nach einem der vorangehenden Ansprüche, **dadurch gekennzeichnet, dass** die Positioniermittel (3,4;5) ein oder mehrere Förderbänder (3,4) und ein oder mehrere, mit diesem zusammenwirkende und/oder baulich integrierte Haltekörper (5) umfassen, wobei das oder die Haltekörper (5) in oder entgegen der Förderrichtung linear geführt sind.

17. Formeinheit (2) nach Anspruch 16, wobei mehrere solche Förderbänder (3,4) im Abstand nebeneinander verlaufend, und dazwischen eine Mehrzahl der Haltekörper (5) derart vorspringend angeordnet sind, dass letztere für den gebogenen Abschnitt (36a) des U-förmigen Teigstrangs (36) oder für den vom Knoten abgegrenzten, rundlichen Mittelabschnitt des Brezelrohlings einen Halterungssattel bilden, **dadurch gekennzeichnet, dass** die Haltekörper (5) vom Linearantrieb (10,1.1) in und entgegen der Förderrichtung (51) geführt sind.

## Claims

1. Method of manufacturing a pretzel from a dough strand (36) bent into a U-shape with a mould unit (2, 6) holding the same, in which the dough strand (36) is held or grasped in the U-shape by means of dough strand positioning means (3, 4; 5) and is worked in combination with gripper means (34, 35) to form a pretzel blank (45) with a tied pretzel knot, wherein the gripper means (34, 35) grasp and hold the dough strand ends (36b), **characterised in that** the positioning means (3, 4; 5) are used to expand, tension and/or stretch the U-shaped dough strand (36), which is held in the mould unit (2, 6) at its ends by the gripper means (34, 35), by a predetermined degree of expansion (d), **in that** the positioning means (3, 4; 5) abutting or grasping or conveying the dough strand are moved or displaced in or opposite to the mould unit (2, 6) according to the degree of expansion (d).

2. Method according to claim 1, **characterised in that** the tying of the pretzel knot is carried out after displacement of the positioning means (3, 4; 5) according to the degree of expansion (d) and whilst retaining the tension of the dough strand thereby generated.

3. Method according to claim 1 or 2, **characterised by** tying guide elements (14, 15) which can be moved together and apart and which are used for encompassing, encircling or clasping the dough strand arm sections (36b).

4. Method according to one of the preceding claims, **characterised in that** the degree of expansion (d) is predetermined according to the type of dough.

5. Method according to one of the preceding claims, **characterised in that**, after tying of the pretzel knot, the positioning means (3, 4; 5) are used for displacing the curved central section (36a) of the U-shape of the dough strand (36) held in the mould unit (2, 6) and at its ends by the gripper means (34, 35), by a predetermined dough strand displacement distance (e) in the direction of the dough strand ends (36b) and/or gripper means (34, 35), **in that** the positioning means (3, 4; 5) abutting, grasping or conveying the dough strand (36) are moved or displaced in or relative to the mould unit (2, 6) according to the dough strand displacement distance (e), and thereafter the dough strand ends (36b) are placed with the gripper means (34, 35) on the section (36a) of the dough strand (36) bent in a U-shape.

6. Method according to claim 5, **characterised in that** the dough strand displacement distance (e) is predetermined according to the customer's wishes.

7. Apparatus for the mechanical manufacture of pretzels for carrying out the method according to one of the preceding claims, having a device (1) for supplying U-shaped dough strands (36) into a downstream mould unit (2), which is formed for holding the supplied U-shaped dough strand (36) and for processing the same into a pretzel blank (45), having a pretzel blank discharge device allocated to an outlet of the mould unit (2), having a gripper device (34, 35), which is formed for grasping or holding the dough strand ends (36b) out of and/or into the mould unit (2), and which is linearly movable along a dough strand and pretzel blank conveying direction (51) between the supply and discharge device (1; 18, 19) and in a direction (38, 47) transverse thereto, and having means (14-17; 22, 29, 30) for tying a pretzel knot with the arm sections of the U-shaped strand (36) located in the mould unit (2), wherein the gripper device (34, 35) and the tying means (14-17; 22, 29, 30) are controllable by a control, and the mould unit (2, 6) is provided with dough strand positioning means (3, 4; 5) controllable by the control and linearly drivable (10, 11) and guided (9) in and opposite to the conveying direction (51), by means of which positioning means the dough strand (36) or pretzel blank (45) is movable entirely or partly relative to the gripper device (34, 35) holding the dough strand ends (36b), wherein the control is coupled on the input side to signal transmitters, which respond or relate to the position of the strand ends (36b), of the gripper device (34, 35) and/or of the tying means (22, 29, 30), and on the output side to the linear drive (10, 11) for the positioning means (3, 4; 5) for triggering the same, **characterised in that** the control may be set with a dough strand degree of expansion (d) according to which, when the dough strand ends (36b) are grasped by the gripper device (34, 35), the linear drive (10, 11) of the positioning means (3, 4; 5) may be triggered to expand or displace the dough strand (36) in the direction away from the gripper device (34, 35) holding the dough strand ends (36b).

8. Apparatus according to claim 7, **characterised in that** the control may be set with a dough-strand displacement distance (e) according to which, upon completion of the knot by the tying means (22, 29, 30) the linear drive (10, 11) of the positioning means (3, 4; 5) are so movable for displacement of the dough strand (36) in the direction (13) towards the gripper device (34, 35) holding the dough strand ends (36b) that the dough strand ends (36b) may be placed by displacement of the gripper device (34, 35) in the transverse direction (38) on the rest of the dough strand (36a).

9. Apparatus according to one of the preceding claims, **characterised in that** in a starting phase, the linear drive (10, 11) of the positioning means (3, 4; 5) may be so triggered by the control that the ends (36b) of the U-shaped dough strand (36) located in the mould unit (2) come to rest on the discharge device (18, 19), and in a subsequent phase the linear drive (10, 11) of the positioning means (3, 4; 5) may be so triggered by the control that the ends (36b) of the dough strand (36) are pulled from the discharged device to the mould unit (2), wherein the gripper device (34, 35) may be so triggered by the control that it grasps the dough strand ends (36b),'when its position may be fixed between the mould unit (2) and the discharge device (18, 19).

10. Apparatus according to claim 9, **characterised by** sensor means (20, 21) associated with the inlet of the control, which are disposed and formed in the intermediate region (46) between the outlet of the mould unit (2) and the inlet of the discharge unit (18, 19) in order to detect the dough strand ends (36b).

11. Apparatus according to one of the preceding claims, **characterised in that** the discharge device (18, 19) has an intermediate table (18) with conveyor belt (18a), whose inlet is directly opposite to the outlet of the mould unit (2), and a downstream discharge table (19) with conveyor belt (19a), wherein the conveyor belt (18a) of the intermediate table (18) is formed to operate at different speeds.

12. Apparatus according to one of the preceding claims, **characterised in that** the gripper device (34, 35) and the tying means (22, 29, 30) are structurally and/or functionally integral with one another, **in that** the gripper device (34, 35) has two gripper elements (39a, 40; 41) associated with respective ends of the U-shaped dough strand located in the mould unit, which gripper elements are disposed on a common rotary yoke (31), which is rotatable by a rotary drive (29) controllable by the control and is linearly movable in the transverse direction (38, 47) from and to the dough strand (36) located in the mould unit (2).

13. Apparatus according to claim 12, **characterised in that** the rotary yoke (31) for the gripper elements (39a, 40; 41, 42) has two fixing places, which are arranged at a distance from one another corresponding to the distance between the ends of the U-shaped dough strand (36) located in the mould unit (2).

14. Apparatus according to claim 12 or 13, **characterised by** a rotary yoke (31) so guided that its axis of rotation (30) extends solely transverse to the upper face and/or contact face of the mould unit (2).

15. Apparatus according to one of the preceding claims, **characterised by** tying means (14-17; 22, 29, 30) with tying guide elements (14, 15) which are driven linearly transverse to the conveying direction (51) between the mould unit (2) and the gripper device (34, 35) and which may be moved together and apart, and which are formed for encompassing, encircling or clasping the dough strand arm sections (36b) in a tying operation for the formation of a pretzel knot.

16. Mould unit (2) for an apparatus according to one of the preceding claims, **characterised in that** the positioning means (3, 4; 5) comprise one or more conveyor belts (3, 4) and one or more holding bodies (5) cooperating therewith and/or structurally integral therewith, the holding body or bodies (5) being guided linearly in or opposite to the conveying direction.

17. Mould unit (2) according to claim 16, wherein a plurality of such conveyor belts (3, 4) are arranged extending adjacent to one another but spaced apart, and in between a plurality of holding bodies (5) are disposed projectingly in such a manner that the holding bodies (5) form for the curved section (36a) of the U-shaped dough strand (36) or for the round middle section of the pretzel blank defined by the knot a mounting saddle, **characterised in that** the holding bodies (5) are guided by the linear drive (10, 11) in and opposite to the conveying direction (51).

## Revendications

1. Procédé pour produire un bretzel à partir d'un boudin de pâte (36) cintré sous une forme en U, comportant une unité de mise en forme (2,6) retenant ce dernier, dans laquelle le boudin de pâte (36) est maintenu ou saisi sous la forme en U, à l'aide de moyens de positionnement (3,4 ; 5) du boudin de pâte, et, en combinaison avec des moyens de préhension (34, 35), est transformé en une ébauche de bretzel (45) avec un noeud de bretzel formé par entrelacement, les moyens de préhension (34,35) saisissant et retenant les extrémités (36b) du boudin de pâte, **caractérisé en ce que** l'on utilise les moyens de positionnement (3,5 ; 5) pour allonger, tendre et/ou étirer, d'une grandeur d'allongement déterminée (d), le boudin de pâte en U (36) retenu, à ses extrémités, dans l'unité de mise en forme (2,6), et par les moyens de préhension (34,35), en faisant se mouvoir ou en déplaçant dans ou par rapport à l'unité de mise en forme (2,6), dans une mesure correspondant à la grandeur d'allongement (d), les moyens de positionnement (3,4 ; 5) qui s'appliquent contre le boudin de pâte (36) ou saisissent ce dernier ou le font avancer.

2. Procédé selon la revendication 1, **caractérisé en ce que** la formation du noeud de bretzel par entrelacement s'effectue après le déplacement des moyens de positionnement (3,4 ; 5) en correspondance avec la grandeur d'allongement (d) et sous conservation de la tension du boudin de pâte ainsi développée.

3. Procédé selon la revendication 1 ou 2, **caractérisé par** des éléments guides d'entrelacement (14,15) pouvant être rapprochés et écartés l'un de l'autre, qui sont utilisés pour entourer, ceindre ou enserrer les tronçons (36b) du boudin qui en constituent les branches, lors de l'opération de formation par entrelacement du noeud de bretzel.

4. Procédé selon l'une des revendications précédentes, **caractérisé en ce que** la grandeur d'allongement (d) est prédéterminée en fonction de la nature de la pâte.

5. Procédé selon l'une des revendications précédentes, **caractérisé en ce que**, après la formation du noeud de bretzel par entrelacement, on utilise les moyens de positionnement (3,4; 5) pour déplacer, par rapport aux extrémités (36b) du boudin de pâte ou aux moyens de préhension (34,35), le tronçon médian (36a), cintré en forme de U, du boudin de pâte en U (36) retenu, à ses extrémités, dans l'unité de mise en forme (2,6) et par les moyens de préhension (34,35), d'une grandeur de décalage (e), prédéterminée, du boudin de pâte en direction des extrémités (36b) du boudin de pâte et/ou des moyens de préhension (34,35) en faisant se mouvoir ou en déplaçant dans ou par rapport à l'unité de mise en forme (2,6), dans une mesure correspondant à la grandeur de décalage (e) du boudin de pâte, les moyens de positionnement (3,4 ; 5) qui s'appliquent contre le boudin de pâte (36) ou saisissent ce dernier ou le font avancer, et en déposant ensuite les extrémités (36b) du boudin de pâte, à l'aide des moyens de préhension (34,35), sur le tronçon cintré en forme de U (36a) du boudin de pâte (36).

6. Procédé selon la revendication 5, **caractérisé en ce que** la grandeur de décalage (e) du boudin de pâte est prédéterminée chaque fois d'après le souhait du client.

7. Dispositif pour la production mécanisée de bretzels, destiné à la mise en oeuvre du procédé selon l'une des revendications précédentes, comportant une structure (1) pour amener des boudins de pâte (36) en forme de U dans une unité de mise en forme (2) disposée en aval, qui est conçue pour maintenir le boudin de pâte amené (36) en forme de U et pour le transformer en une ébauche de bretzel (45), une structure d'évacuation (18,19) des ébauches de bretzel associée à une sortie de l'unité de mise en forme (2), une structure de préhension (34,35) qui est conçue pour saisir ou maintenir les extrémités (36b) du boudin de pâte, sur et/ou dans l'unité de mise en forme (2), et est déplaçable en translation linéaire suivant une direction d'avancement (51) des boudins de pâte et des ébauches de bretzel, entre la structure d'amenée et la structure d'évacuation (1 ; 18,19), et une direction transversale (38,47) par rapport à la direction d'avancement, et des moyens (14 à 17 ; 22,29,30) pour former un noeud de bretzel par entrelacement de tronçons constituant les branches du boudin de pâte (36) en forme de U se trouvant dans l'unité de mise en forme (2), la structure de préhension (34,35) et les moyens d'entrelacement (14 à 17 ; 22,29,30) étant manoeuvrables par une commande, et l'unité de mise en forme (2,6) étant équipée de moyens de positionnement (3,4 ; 5) pour le boudin de pâte, manoeuvrables par la commande, qui sont susceptible d'être entrainés (10,11) et sont guidés (9) linéairement dans la direction d'avancement (51) et en sens opposé à celle-ci, et au moyen desquels le boudin de pâte (36) ou l'ébauche de bretzel (45) peuvent, en totalité ou en partie, être déplacés dans la direction d'avancement (51) en ou sens opposé à celle-ci, par rapport à la structure de préhension (34,35) retenant les extrémités (36b) du boudin de pâte, la commande étant alors connectée, du côté de son entrée, à des générateurs de signaux, qui réagissent ou sont rapportés à la position des extrémités (36b) du boudin, de la structure de préhension (34,35) et/ou des moyens d'entrelacement (22,29,30), et, du côté de sa sortie, au système d'entraînement linéaire (10,11) pour les moyens de positionnement (3,4 ; 5), en vue de son excitation, **caractérisé en ce que** la commande est ajustable à l'aide d'une grandeur d'allongement (d) pour le boudin de pâte, conformément à laquelle, lorsque les extrémités (36b) du boudin de pâte sont saisies par la structure de préhension (34,35), le système d'entraînement linéaire (10,11) des moyens de positionnement (3,4 ; 5) peut être excité pour allonger ou translater le boudin de pâte (36) dans la direction (12) s'éloignant de la structure de préhension (34,35) qui retient les extrémités (36b) du boudin de pâte.

8. Dispositif selon la revendication 7, **caractérisé en ce que** la commande est ajustable à l'aide d'une grandeur de décalage (e) du boudin de pâte, conformément à laquelle, après la réalisation complète du noeud par les moyens d'entrelacement (22,29,30), le système d'entraînement linéaire (10,11) des moyens de positionnement (3,4 ; 5) peut être mis en mouvement pour décaler ou translater le boudin de pâte (36) en direction (13) de la structure de préhension (34,35) retenant les extrémités (36b) du boudin de pâte, de telle manière que les extrémités (36b) du boudin de pâte, sous l'effet d'un déplacement de la structure de préhension (34,35) dans la direction transversale (38), puissent se déposer sur la partie restante (36a) du boudin de pâte.

9. Dispositif selon l'une des revendications précédentes, **caractérisé en ce que**, dans une phase initiale, le système d'entraînement linéaire (10,11) des moyens de positionnement (3,4 ; 5) peut être excité, par la commande, d'une manière telle, que les extrémités (36b) du boudin de pâte (36), qui se trouve sous une forme en U dans l'unité de mise en forme (2), viennent en appui sur la structure d'évacuation (18,19), et, dans une phase ultérieure, le système d'entraînement (10,11) des moyens de positionnement (3,4 ; 5) peut être excité, par la commande, d'une manière telle, que les extrémités (36b) du boudin de pâte (36) soient tirées par la structure d'évacuation (18,19) vers l'unité de mise en forme (2), auquel cas la structure de préhension (34,35) peut être excitée, par la commande, d'une manière telle, qu'elle saisisse les extrémités (36b) du boudin de pâte lorsque leur position est décelable entre l'unité de mise en forme (2) et la structure d'évacuation (18,19).

10. Dispositif selon la revendication 9, **caractérisé par** des moyens de détection (20,21) reliés à l'entrée de la commande, qui sont positionnés et conçus pour repérer les extrémités (36b) du boudin de pâte dans la région intercalaire (46) entre la sortie de l'unité de mise en forme (2) et l'entrée de l'unité d'évacuation (18,19).

11. Dispositif selon l'une des revendications précédentes, **caractérisé en ce que** la structure d'évacuation (18,19) comporte une table intercalaire (18) à bande transporteuse (18a), dont l'entrée fait directement face à la sortie de l'unité de mise en forme (2), et une table d'évacuation (19) à bande transporteuse (19a), disposée en aval, la bande transporteuse (18a) de la table intercalaire (18) étant conçue pour fonctionner à différentes vitesses.

12. Dispositif selon l'une des revendications précédentes, **caractérisé en ce que** la structure de préhension (34,35) et les moyens d'entrelacement (22,29,30) sont intégrés l'une aux autres structurellement et/ou fonctionnellement, de par le fait que la structure de préhension (34,35) comporte deux organes de préhension (39a,40; 41) qui sont associés chacun à une extrémité respective du boudin de pâte en forme de U, se trouvant dans l'unité de mise en forme, et qui sont disposés sur une monture tournante commune (31), laquelle peut être déplacée en rotation par un moteur d'entraînement en rotation (29), manoeuvrable par la commande, et en translation linéaire dans la direction transversale (38,47), depuis et vers le boudin de pâte ( 36) se trouvant dans l'unité de mise en forme (2).

13. Dispositif selon la revendication 12, **caractérisé en ce que** la monture tournante (31) pour les organes de préhension (39a,40 ; 41,42) présente deux points de fixation, qui sont disposés à une certaine distance l'un de l'autre, laquelle correspond à l'écartement des extrémités du boudin de pâte (36) en forme de U, qui se trouve dans l'unité de mise en forme (2).

14. Dispositif selon la revendication 12 ou 13, **caractérisé par** une monture tournante (31) dirigée de telle manière que son axe de rotation (30) s'étende exclusivement dans une direction transversale à la face supérieure et/ou la face d'appui de l'unité de mise en forme.

15. Dispositif selon l'une des revendications précédentes, **caractérisé par** des moyens d'entrelacement (14 à 17 ; 22 ,29,30) comportant des éléments guides d'entrelacement (14,15) entraînés (16,17) linéairement dans une direction transversale à la direction d'avancement (51), entre l'unité de mise en forme (2) et la structure de préhension (34,35), et pouvant être rapprochés et écartés l'un de l'autre, lesquels éléments guides d'entrelacement sont conçus pour entourer, ceindre ou enserrer les tronçons (36b) du boudin de pâte qui en constituent les branches, lors de l'opération d'entrelacement servant à une formation de noeud sur un bretzel.

16. Unité de mise en forme (2) pour une dispositif selon l'une des revendications précédentes, **caractérisée en ce que** les moyens de positionnement (3,4; 5) comprennent une ou plusieurs bandes transporteuses (3,4) et un ou plusieurs corps de retenue (5) coopérant avec et/ou intégrés structurellement à ces dernières, le ou les corps de retenue (5) étant guidés linéairement dans la direction d'avancement ou en sens opposé à celle-ci.

17. Unité de mise en forme (2) selon la revendication 16, dans laquelle plusieurs desdites bandes transporteuses (3,4) sont disposées s'étendant les unes à côtés des autres, avec des intervalles mutuels, et une multiplicité des corps de retenue (5) sont disposés en saillie entre elles d'une manière telle, que ces derniers forment une selle de support pour le tronçon cintré (36a) du boudin de pâte (36) en forme de U ou pour le tronçon médian arrondi de l'ébauche de bretzel, démarqué par le noeud, **caractérisée en ce que** les corps de retenue (5) sont guidés par le système d'entraînement linéaire (10,11) dans la direction d'avancement (51) et en sens opposé à celle-ci.
